# EUROPEAN PATENT APPLICATION

(11) **EP 3 640 513 A1**
(43) Date of publication of application: **22.04.2020**
(21) Application number: 17913869.8
(22) Date of filing: 14.06.2017
(51) Int. Cl.: F16L 25/00, B29C 70/44, F16L 23/02, F16L 37/28

(54) **VACUUM JOINT AND VACUUM UTILIZATION DEVICE USING SAME**

(71) Applicant: Ashida MFG Co., Ltd., Ikoma-shi, Nara 630-0101 (JP)
(72) Inventor: ASHIDA Takeshi, Ikoma-shi Nara 630-0101 (JP); NOGUCHI Tadashi, Ikoma-shi Nara 630-0101 (JP)
(74) Representative: Horn Kleimann Waitzhofer Patentanwälte PartG mbB
(86) International application number: PCT/JP2017/021904
(87) International publication number: WO 2018/229884

(57) **Abstract**

Provided are: a vacuum joint having a simple structure and thus capable of connecting and disconnecting vacuum pipes very easily and quickly; and a vacuum utilization device including this vacuum joint. A vacuum joint (10) of the present invention includes: a first coupling member (14) having a tubular shape and adapted to be attached to a connection end of a vacuum pipe (12X); and a second coupling member (16) having a tubular shape and adapted to be attached to a connection end of a vacuum pipe (12Y). The first coupling member (14) has an axial front end with a substantially flat contact surface (14a) that contains a ferromagnetic material, and the second coupling member (16) has an axial front end with a substantially flat contact surface (16a) that contains a ferromagnetic material. At least one of the contact surface (14a) of the first coupling member (14) and the contact surface (16a) of the second coupling member (16) includes a magnet (18).

## Description

### Technical Field

The present invention relates to a vacuum joint used to connect or disconnect vacuum pipes such as vacuum hoses, and to a vacuum utilization device including the vacuum joint.

### Background Art

Vacuum techniques are used in various production processes, and an example of these techniques is an autoclave molding device described in Patent Literature 1 below (Japanese Laid-Open Patent Publication No. H04-144717).

This autoclave molding device is a vacuum utilization device for producing molded articles such as fiber-reinforced plastics. A molded article is produced in the following manner using this type of device. A tool is placed on a tool carriage, sheets of a prepreg as a ready-to-mold material used to form the molded article are laid on the tool to form a laminate, and then the entire laminate is covered with a vacuum bag and sealed. Subsequently, the entire assembly including the prepreg laminate on the carriage is placed inside a pressure vessel. Then, using a vacuum joint, an operator connects the front end of a vacuum pipe communicating with the interior of the sealed vacuum bag and the front end of a vacuum pipe (vacuum nozzle) extending from a pressure reducing means. The pressure vessel is sealed, and then high-pressure steam is introduced into the vessel or high-pressure gas is introduced thereinto and heated while the pressure inside the vacuum bag is reduced. The prepreg is thus heated and pressurized and then compacted and cured. The molded article is thus produced by heating and pressurizing the prepreg for a predetermined period of time, and then the interior of the pressure vessel is vented and cooled down to about 60°C. After the venting and cooling, the operator disconnects the connection of the above-mentioned vacuum joint to remove the molded article placed on the tool carriage from the vessel.

### Citation List

### [Patent Literature]

[PTL 1] Japanese Laid-Open Patent Publication No. H04-144717

### Summary of Invention

### Technical Problem

The conventional technique described above has the following disadvantages.

In a conventional autoclave molding device, a so-called one-touch coupler including a female socket and a male plug to be inserted into the socket is used as a vacuum joint. In this one-touch coupler, a certain amount of force is required to connect and disconnect the plug and the socket because the connection structure between them is relatively complex. This type of one-touch couplers can be used without any inconvenience when a relatively small molded article is produced and a small number of vacuum pipes are introduced into the device from the pressure reducing means. However, when a large-sized molded article for use, for example, for aircraft structures, is produced in an autoclave molding device, a large number of, for example, several tens of or several hundreds of, vacuum pipes are introduced into the device from a single pressure reducing means, in many cases, and therefore it is a cumbersome (energy-consuming) and time-consuming task for the operator to connect and disconnect these vacuum pipes. This is disadvantageous.

It is, therefore, a primary object of the present invention to provide a vacuum joint having a simple structure and thus capable of connecting and disconnecting vacuum pipes very easily and quickly.

It is a further object of the present invention to provide a highly productive vacuum utilization device including such a vacuum joint and thus capable of connecting and disconnecting vacuum pipes efficiently.

### Solution to Problem

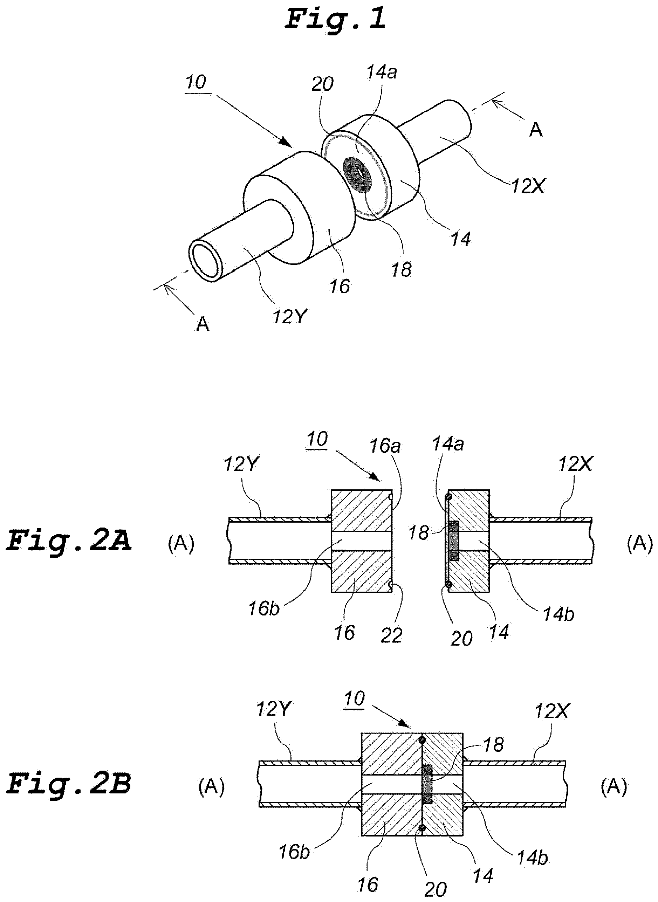

In order to achieve the above objects, according to the present invention, a vacuum joint for connecting the adjacent connection ends of a pair of vacuum pipes 12X and 12Y so as to allow a fluid to flow through the vacuum pipes 12X and 12Y is configured in the following manner, as shown, for example, in FIG. 1 to FIG. 6.

This vacuum joint includes: a first coupling member 14 having a tubular shape and adapted to be attached to the connection end of the vacuum pipe 12X; and a second coupling member 16 having a tubular shape and adapted to be attached to the connection end of the vacuum pipe 12Y. The first coupling member 14 has an axial front end with a substantially flat contact surface 14a that contains a ferromagnetic material, and the second coupling member 16 has an axial front end with a substantially flat contact surface 16a that contains a ferromagnetic material. At least one of the contact surface 14a of the first coupling member 14 and the contact surface 16a of the second coupling member 16 includes a magnet 18.

As used herein, a "tubular shape" refers to the shape of a hollow block having two open axial ends to form a through hole as a fluid passage. The "tubular shape" includes not only a cylindrical tube having a cylindrical columnar outer shape but also a prismatic tube having a prismatic columnar outer shape. In addition, the "tubular shape" includes not only a tube having a single fluid passage therein but also a tube having a plurality of fluid passages therein.

For example, the present invention has the following advantageous effects.

Since the contact surface 14a of the first coupling member 14 and the contact surface 16a of the second coupling member 16 are both substantially flat surfaces and magnetic force is used to connect the contact surfaces 14a and 16a, this magnetic force maintains the connection between the contact surfaces 14a and 16a while the vacuum pipes 12X and 12Y thus connected are not evacuated. On the other hand, the operation of separating the first coupling member 14 and the second coupling member 16 does not require such a great force as to separate a plug and a socket of a one-touch coupler that are mechanically locked and firmly connected together. Therefore, the operation of connecting and separating the first coupling member 14 and the second coupling member 16 can be carried out very easily.

In the present invention, it is preferable that the first coupling member 14 and the second coupling member 16 each include a fluid control means configured to allow a fluid to flow through the first and second coupling members 14 and 16 when the first and second coupling members 14 and 16 are connected together and to stop the flow of the fluid through the first and second coupling members 14 and 16 when the first and second coupling members 14 and 16 are separated from each other.

In the present invention, it is preferable that when the vacuum joint is used in a heat treatment device, the magnet 18 has a residual magnetic flux density of 40 mT or more after being heated at 180°C for 30 minutes in the atmosphere. It is also preferable that the ferromagnetic material contained in the contact surface 14a of the first coupling member 14 and the ferromagnetic material contained in the contact surface 16a of the second coupling member 16 each have a Curie temperature higher than a processing temperature of the heat treatment device.

In these cases, the vacuum joint can be suitably used particularly in an environment where high temperature is applied repeatedly thereto, such as in an autoclave molding device not only as a type of vacuum utilization device but also as a heat treatment device.

In the present invention, it is preferable that the contact surface 14a of the first coupling member 14 or the contact surface 16a of the second coupling member 16 includes a sealing member 20 configured to seal an interface formed between the contact surface 14a and the contact surface 16a when the contact surface 14a and the contact surface 16a are brought into contact with each other, so as to prevent inflow or outflow of a fluid at the interface.

In a conventional one-touch coupler commonly used as a vacuum joint, a sealing member for sealing the interface between a socket and a plug that are connected together is disposed at the bottom of the socket to prevent inflow or outflow of a fluid at the interface. Since the sealing member disposed at the bottom of the socket is less accessible, it is difficult to check the state of the sealing member and replace the worn member with a new one. In contrast, in the vacuum joint of the present invention, the sealing member 20 is mounted on the contact surface 14a or the contact surface 16a. Therefore, it is very easy to access the sealing member 20 and thus easy to check the state of the sealing member 20 and replace it with a new one.

In the present invention, it is preferable that one of the contact surface 14a of the first coupling member 14 and the contact surface 16a of the second coupling member 16 has a projection 24 for positioning, and that the other one of the contact surface 14a and the contact surface 16a has a recess 26 for guiding and receiving the projection 24, in a position corresponding to the projection 24.

In this case, the operation of connecting and separating the first coupling member 14 and the second coupling member 16, especially the operation of connecting them, can be carried out easily.

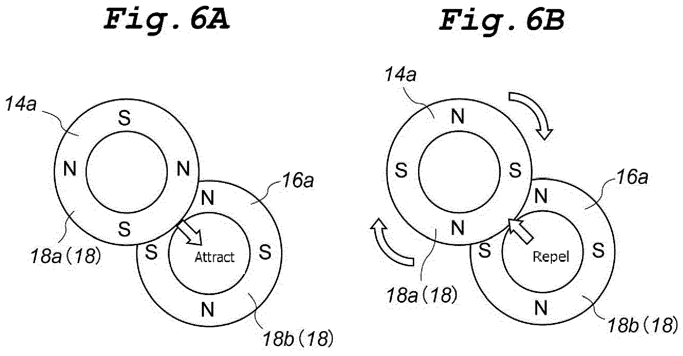

In the present invention, it is preferable that the contact surface 14a of the first coupling member 14 includes a ring-shaped magnet 18a embedded therein, and the contact surface 16a of the second coupling member 16 includes a ring-shaped magnet 18b embedded therein and having substantially the same shape and size as the ring-shaped magnet 18a, and that the ring-shaped magnets 18a and 18b are each divided circumferentially into an even number of equal parts, and the parts are arranged so that surfaces of the adjacent parts have opposite magnetic polarities (see FIG. 6).

In this case, the operation of connecting and separating the vacuum joint can be carried out more easily with the aid of the magnetic force only by rotating either one of the first coupling member 14 and the second coupling member 16 about the axis of the vacuum pipe 12X or 12Y.

A second aspect of the present invention is a vacuum utilization device including the vacuum joint of the present invention. This vacuum utilization device includes all types of machines and devices utilizing vacuum, and among them, it is preferably a device for producing molded articles. More preferably, the device for producing molded articles is an autoclave molding device including a pressure vessel 40, the device being configured to: evacuate an interior of a vacuum bag 50 that covers a prepreg 36 made of a fibrous base material and a thermosetting or thermoplastic resin matrix and that is placed in the pressure vessel 40; and then heat and pressurize the prepreg 36 so as to mold the prepreg 36 into a predetermined shape.

### Advantageous Effects of the Invention

According to the present invention, it is possible to provide a vacuum joint having a simple structure and thus capable of connecting and disconnecting vacuum pipes very easily and quickly.

It is also possible to provide a highly productive vacuum utilization device including the vacuum joint of the present invention and thus capable of connecting and disconnecting vacuum pipes efficiently.

### Brief Description of Drawings

FIG. 1 is a perspective view showing an overview of a vacuum joint according to an embodiment of the present invention.
FIG. 2A is a cross-sectional view taken along the line AA of FIG. 1; and FIG. 2B is a view of the vacuum joint of FIG. 2A in a connected state.
FIG. 3 is a cross-sectional view showing an overview of a vacuum joint according to another embodiment of the present invention.
FIG. 4 is a cross-sectional view showing an overview of a vacuum joint according to another embodiment of the present invention.
FIG. 5 is a cross-sectional view showing an overview of a vacuum joint according to another embodiment of the present invention.
FIG. 6 is a diagram illustrating an operation of a vacuum joint according to another embodiment of the present invention.
FIG. 7 is a diagram showing an overview of an autoclave molding device including the vacuum joint of the present invention, in which FIG. 7A is a schematic side view of the device with a partial section thereof, and FIG. 7B is a partial sectional view taken in the direction of an arrow XX in FIG. 7A.
FIG. 8 is a schematic side sectional view of a prepreg sealed in a vacuum bag.

### Description of Embodiments

Hereinafter, an embodiment of the present invention will be described with reference to the drawings.

FIG. 1 is a perspective view showing an overview of a vacuum joint 10 according to an embodiment of the present invention, and FIG. 2A is a cross-sectional view taken along the line AA of FIG. 1. As shown in these figures, the vacuum joint 10 of the present embodiment is configured to detachably connect the adjacent connection ends of a vacuum pipe 12X and a vacuum pipe 12Y, and includes a first coupling member 14 adapted to be attached to the connection end of the vacuum pipe 12X and a second coupling member 16 adapted to be attached to the connection end of the vacuum pipe 12Y.

The first coupling member 14 and the second coupling member 16 are each a tubular member made of a material with high mechanical strength, such as a metal. One axial end of the first coupling member 14 is attached to the connection end of the vacuum pipe 12X, and one axial end of the second coupling member 16 is attached to the connection end of the vacuum pipe 12Y. The other axial end of the first coupling member 14 and the other axial end of the second coupling member 16 have substantially flat contact surfaces 14a and 16a, respectively, and the contact surfaces 14a and 16a each contain a ferromagnetic material such as iron, cobalt, nickel, their alloy, or ferrite. Thus, through holes 14b and 16b are formed along the central axis of the first coupling member 14 and that of the second coupling member 16, respectively, so as to communicate the vacuum pipes 12X and 12Y.

Here, the first coupling member 14 and the second coupling member 16 may be in any form at least as long as the contact surface 14a and the contact surface 16a each contain a ferromagnetic material. For example, the entire bodies of the first coupling member 14 and the second coupling member 16 may be formed of a ferromagnetic material. When the vacuum joint 10 is used in a heat treatment device, it is preferable that the ferromagnetic material has a Curie temperature higher than the processing temperature of the heat treatment device. For example, in the case where the heat treatment device is an autoclave molding device having a processing temperature of up to 230°C, it is preferable that the ferromagnetic material contained in the contact surface 14a and the ferromagnetic material contained in the contact surface 16a of the vacuum joint 10 used in this autoclave molding device each have a Curie temperature higher than 230°C.

A ring-shaped magnet 18 is embedded in the contact surface 14a of the first coupling member 14 to surround the through hole 14b. When this magnet 18 is used in an environment where high temperature is repeatedly applied to the magnet 18, for example, in an autoclave molding device, it is preferable that this magnet 18 has a residual magnetic flux density of 40 mT or more after being heated at 180°C for 30 minutes (the temperature is increased from room temperature over 60 minutes and decreased to room temperature over 60 minutes) in the atmosphere. This residual magnetic flux density after heating is limited to the above range for the following reasons.

As test specimens, cylindrical ferrite, neodymium, SmCo (samarium-cobalt), and AlNiCo (aluminum-nickel-cobalt) magnets (3 magnets for each type) having an outer diameter of 13 to 15 mm and a height of 10 to 12 mm were prepared and their magnetic forces (i.e., residual magnetic flux densities) were measured using a hand-held gaussmeter (Model 410, Lake Shore Cryotronics, USA).

Subsequently, each of the above specimens was heated at 180°C for 30 minutes (the temperature was increased from room temperature over 60 minutes and decreased to room temperature over 60 minutes) in the atmosphere in an autoclave, and after the temperature drop, its residual magnetic flux density was measured in the same manner as described above. After the measurement, each of the specimens was heated again under the same conditions, and after the temperature drop, its residual magnetic flux density was measured.

Lastly, after the second heating and measurement, each of the specimens was heated at 230°C for 30 minutes (the temperature was increased from room temperature over 60 minutes and decreased to room temperature over 60 minutes) in the atmosphere in the autoclave, and after the temperature drop, its residual magnetic flux density was measured in the same manner as described above.

The ratio of the residual magnetic flux density (residual ratio) of each of the heated specimens was calculated, as a relative value, with the residual magnetic flux density of each of the unheated specimens being 100%. Table 1 shows the results.

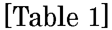

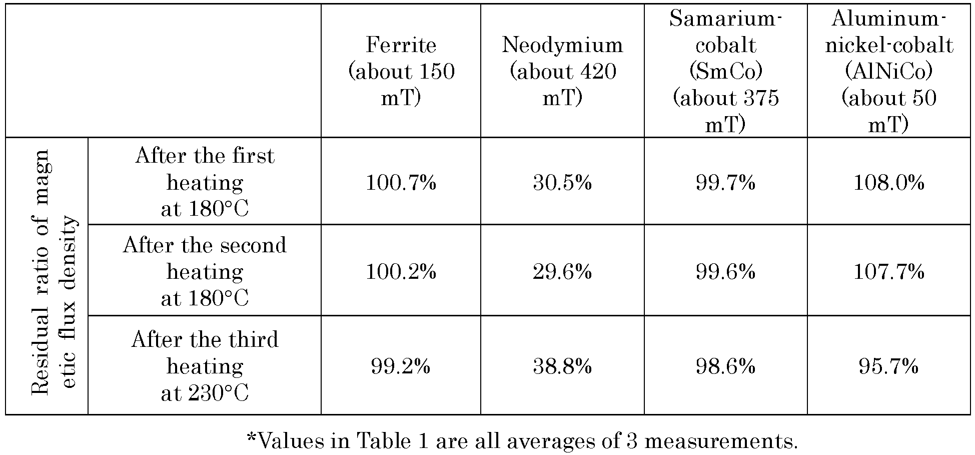

Based on the ratio of the residual magnetic flux density of each of the heated specimens calculated as described above and the sensory evaluation of the attractive force of each of the heated specimens to an iron plate, a magnet 18 having a post-heating residual magnetic flux density within the above range was selected for use. In this case, the magnetic flux of the specimen used is 7 µWb when calculated based on its shape and outer diameter (15 mm).

The magnet 18 may be in any form as long as the magnetic force exerted between the magnet 18 and the ferromagnetic material contained in the contact surface 16a of the second coupling member 16 is strong enough to maintain the connection between the first coupling member 14 and the second coupling member 16 to prevent separation from each other when the evacuation of the interior of the vacuum pipes 12X and 12Y is stopped. Therefore, the magnet 18 is not limited to a permanent magnet used in the above experiments, and may be an electromagnet, for example.

In the embodiment shown in FIG. 1 and FIG. 2, the contact surface 14a of the first coupling member 14 includes a sealing member 20 formed of a heat-resistant fluororubber O-ring in a region adjacent to and along the outer periphery of the contact surface 14a, while the contact surface 16a of the second coupling member 16 includes an annular receiving groove 22 having a depth for receiving the about half thickness of the sealing member 20, in a position corresponding to the position of the sealing member 20.

The sealing member 20 is mounted to seal the joint between the first coupling member 14 and the second coupling member 16 so as to prevent inflow or outflow of a fluid through the joint when the fluid passes through the joint. Therefore, the material of the sealing member 20 is not limited to a fluororubber as mentioned above, and any other material such as silicone rubber may be used as long as it has the above-described functions.

According to the vacuum joint 10 configured as described above, when the contact surface 14a of the first coupling member 14 and the contact surface 16a of the second coupling member 16 are brought into contact with each other so that the sealing member 20 is fitted in the receiving groove 22, as shown in FIG. 2B, a magnetic force is exerted between the magnet 18 embedded in the contact surface 14a of the first coupling member 14 and the ferromagnetic material contained in the contact surface 16a of the second coupling member 16, and with this magnetic force, the first coupling member 14 and the second coupling member 16 are securely connected with each other (although this connection strength is smaller than the connection strength of a one-touch coupler) only by bringing the substantially flat contact surfaces 14a and 16a into contact with each other.

All one has to do to separate the first coupling member 14 and the second coupling member 16 from each other is to stop the evacuation of the interior of the vacuum pipes 12X and 12Y and pull the vacuum pipes 12X and 12Y apart from each other against the magnetic force exerted between the magnet 18 embedded in the contact surface 14a of the first coupling member 14 and the ferromagnetic material contained in the contact surface 16a of the second coupling member 16. Therefore, this operation does not require such a great force as to disconnect a plug and a socket of a one-touch coupler that are mechanically locked and firmly connected together.

Preferably, in the vacuum joint 10 of the above embodiment, the first coupling member 14 and the second coupling member 16 each include a fluid control means (not shown) configured to allow a fluid to flow through the first and second coupling members 14 and 16 when they are connected together and to stop the flow of the fluid therethrough when they are separated from each other. An example of this fluid control means is a mechanism including a valve body and a valve spring. When this mechanism is provided in each of the through hole 14b of the first coupling member 14 and the through hole 16b of the second coupling member 16, the valve spring biases the valve body to a closed position to stop the flow of the fluid in the first coupling member 14 and the second coupling member 16. When the first coupling member 14 and the second coupling member 15 are connected together, their valve bodies abut against each other and are moved to an open position.

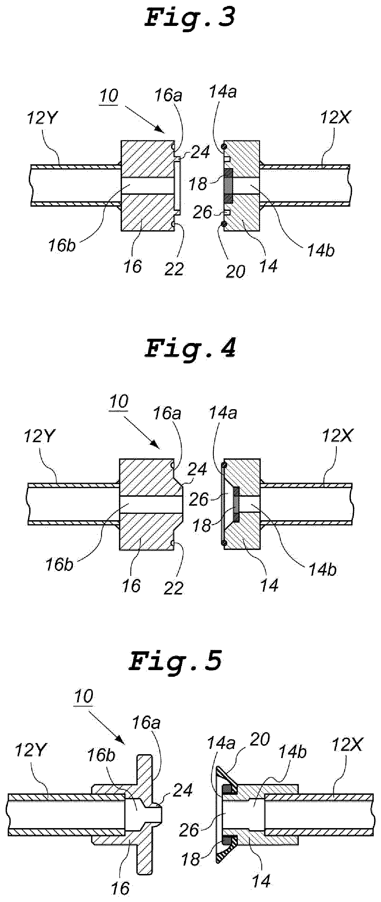

Next, a second embodiment shown in FIG. 3 and FIG. 4 will be described. The second embodiment differs from the above embodiment shown in FIG. 1 and FIG. 2 in that the contact surface 16a of the second coupling member 16 has a projection 24 for positioning and the contact surface 14a of the first coupling member 14 has a recess 26 for guiding and receiving the projection 24, in a position corresponding to the projection 24. The second embodiment is the same as the above embodiment except for these projection 24 and recess 26, and therefore the description of the above embodiment is incorporated in this embodiment by reference and made a part thereof.

The projection 24 projecting from the contact surface 16a of the second coupling member 16 is a member configured to work in conjunction with the recess 26 provided in the contact surface 14a of the first coupling member 14 so as to guide the first coupling member 14 and the second coupling member 16 so that the contact surface 14a and the contact surface 16a come into close contact with each other, the axis of the through hole 14b and the axis of the through hole 16b are aligned with each other, and thus the first coupling member 14 and the second coupling member 16 are connected together.

In an example shown in FIG. 3, this projection 24 has a ring shape surrounding the end face of the through hole 16b on the contact surface 16a side. In an example shown in FIG. 4, this projection 24 is a bulge of a region of the contact surface 16a including the end face of the through hole 16b on the contact surface 16a side. Thus, the recess 26 having a shape corresponding to the shape of the projection 24 is formed in the contact surface 14a of the first coupling member 14.

In the embodiment shown in FIG. 3 and FIG. 4, the second coupling member 16 includes the projection 24 and the first coupling member 14 includes the recess 26, but the first coupling member 14 may include the projection 24 and the second coupling member 16 may include the recess 26.

Next, a third embodiment shown in FIG. 5 will be described. The third embodiment differs from the above embodiments in that not an O-ring but a suction cup is used as the sealing member 20. The third embodiment is substantially the same as the above embodiments except for this suction cup, and therefore the description of the above embodiments is incorporated in this embodiment by reference and made a part thereof.

As shown in FIG. 5, in this embodiment, the vacuum pipe 12X and the first coupling member 14 are connected by inserting the vacuum pipe 12X into the through hole 14b of the first coupling member 14, and the vacuum pipe 12Y and the second coupling member 16 are connected by inserting the vacuum pipe 12Y into the through hole 16b of the second coupling member 16.

The entire contact surface 14a of the first coupling member 14 is covered with a suction cup sealing member 20 made of, for example, a heat-resistant fluororubber, while the contact surface 16a of the second coupling member 16 is radially extended to form a flange and configured to receive the suction cup sealing member 20.

In the embodiment shown in FIG. 5, the first coupling member 14 includes the sealing member 20, but the second coupling member 16 may include the sealing member 20.

Here, in the above embodiments shown in FIG. 1 to FIG. 5, only the contact surface 14a of the first coupling member 14 includes a magnet 18, but the contact surface 16a of the second coupling member 16 may also include a magnet 18. In this case, the magnets 18 must be attached to the first coupling member 14 and the second coupling member 16, respectively, so that the magnet 18 of the first coupling member 14 and the magnet 18 of the second coupling member 16 have opposite magnetic polarities. In addition, when both the first coupling member 14 and the second coupling member 16 include the magnets 18, it is particularly preferable to configure the magnets 18 in the following manner.

As shown in FIG. 6, a ring-shaped magnet 18a is embedded in the contact surface 14a of the first coupling member 14 and a ring-shaped magnet 18b having substantially the same shape and size as the magnet 18a is also embedded in the contact surface 16a of the second coupling member 16. These ring-shaped magnets 18a and 18b are each divided circumferentially into an even number of (4 in the case of FIG. 6) equal parts, and these parts are arranged so that the surfaces of the adjacent parts have opposite magnetic polarities.

Thus, as shown in FIG. 6A, the first coupling member 14 and the second coupling member 16 can be easily connected together only by bringing the surface of the magnet 18a and the surface of the magnet 18b close to each other so that the abutting parts have opposite magnetic polarities. In contrast, the first coupling member 14 and the second coupling member 16 thus connected can be separated from each other by rotating either one of the first coupling member 14 and the second coupling member 16 around the axis of the vacuum pipe (not shown). Then, as shown in FIG. 6B, the parts of the surfaces of the magnet 18a and those of the magnet 18b having the same magnetic polarity face and repel each other. Thus, the first coupling member 14 and the second coupling member 16 can be easily separated from each other.

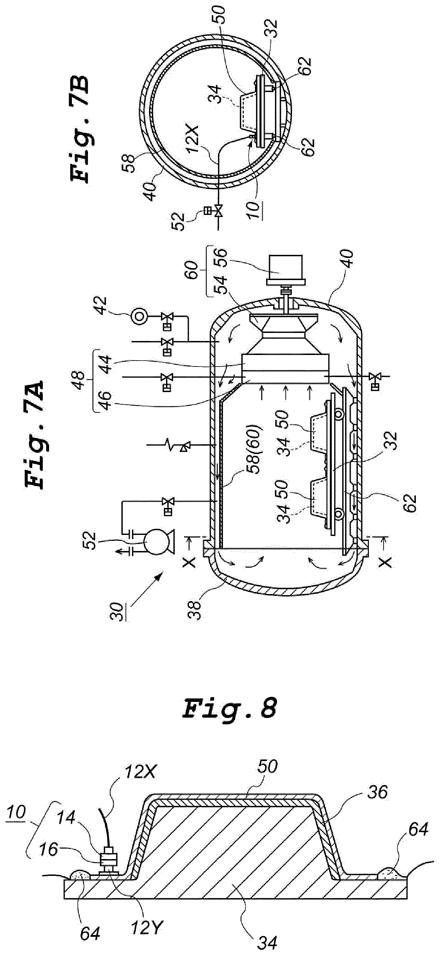

Next, an autoclave molding device 30, as a type of the vacuum utilization device including the vacuum joint 10 of the present invention, will be described with reference to FIG. 7. The autoclave molding device 30 including the vacuum joint 10 of the present invention is a device for producing molded articles such as fiber-reinforced plastics and mainly includes: a pressure vessel 40 adapted to be hermetically sealed by closing a door 38 after a prepreg 36 (see FIG. 8) placed on a tool 34 on a tool carriage 32 is placed inside the pressure vessel 40; a pressurizing means 42 configured to supply high-pressure gas into the pressure vessel 40 so as to pressurize the prepreg 36; a heating/cooling means 48 disposed on the rear side of the pressure vessel 40, including a heater 44 for heating the high-pressure gas introduced into the pressure vessel 40 and a cooler 46 for cooling the high-pressure gas, and configured to heat the prepreg 36 using the gas heated by the heater 44 and to cool the prepreg 36 using the gas cooled by the cooler 46; a pressure reducing means 52 configured to reduce the pressure in the vacuum bag 50 that encloses the prepreg 36 to a high vacuum; a gas circulating means 60 disposed on the rear side of the pressure vessel 40, including a fan 54 configured to deliver the gas heated or cooled by the heating/cooling means 48 into the pressure vessel 40 and a fan driving unit 56, and configured to circulate the gas delivered by the fan 54 through a wind tunnel 58 provided along the pressure vessel 40 so as to heat or cool the prepreg 36; and a control means (not shown) configured to control the temperature, pressure, etc. in the pressure vessel 40. A reference numeral 62 in FIG. 7 refers to a rail for the tool carriage 32 to run on. The above example shows the case where heated high-pressure gas is used as the heating and pressurizing means, but instead, high-pressure steam may be used.

A molded article having a predetermined shape is produced by heating and pressurizing a prepreg 36 made of a fibrous base material and a thermosetting or thermoplastic resin matrix using the autoclave molding device 30 configured as described above. More specifically, a tool 34 is placed on a tool carriage 32, sheets of the prepreg 36 as a ready-to-mold material used to form the molded article are laid on the tool 34 to form a laminate, and then the entire laminate is covered with a vacuum bag 50 and the periphery of the vacuum bag 50 is sealed with a sealant 64, as shown in FIG. 8. Subsequently, the entire assembly including the prepreg 36 on the carriage 32 is placed inside the pressure vessel 40. Then, using the vacuum joint 10, an operator connects the front end of the vacuum pipe 12Y communicating with the interior of the sealed vacuum bag 50 and the front end of the vacuum pipe 12X extending from the pressure reducing means 52. The pressure vessel 40 is sealed, and then the interior of the pressure vessel 40 is heated and pressurized while the pressure inside the vacuum bag 50 is reduced. The prepreg 36 is thus compacted and cured into a predetermined shape. The molded article is thus produced by heating and pressurizing the prepreg 36 for a predetermined period of time, and then the interior of the vacuum vessel 40 is vented and cooled down to about 60°C. After the venting and cooling, the operator disconnects the connection of the above-mentioned vacuum joint 10 in the pressure vessel 40 to remove the molded article placed on the tool carriage 32 from the vessel 40.

Since the autoclave molding device 30 of the present invention includes the vacuum joint 10 as described in detail above, the communication between the interior of the vacuum bag 50 and the pressure reducing means 52 can be achieved efficiently. Thus, the productivity of this device is very high.

The vacuum joint 10 of the present invention can be used not only in the above-described autoclave molding device 30 but also in all types of machines and devices utilizing vacuum, that is, all types of vacuum utilization devices, for example, thin film forming/processing devices such as a vacuum deposition device and a CVD device, analyzing devices such as a scanning electron microscope and an X-ray photoelectron spectroscope (XPS), and vacuum chemical devices such as a vacuum drying device and a vacuum degassing device. The vacuum joint 10 of the present invention can be particularly suitably used in a device for producing molded articles, typified by the autoclave molding device 30 described above, among all of the vacuum utilization devices mentioned above. This is because vacuum pipes are frequently connected and disconnected in such a device for producing molded articles by utilizing vacuum.

### Reference Signs List

10: Vacuum joint
12X: (One) vacuum pipe
12Y: (The other) vacuum pipe
14: First coupling member
14a: Contact surface (of first coupling member)
16: Second coupling member
16a: Contact surface (of second coupling member)
18: Magnet
18a: Magnet (of first coupling member)
18b: Magnet (of second coupling member)
20: Sealing member
24: Projection
26: Recess
30: Autoclave molding device
36: Prepreg
40: Pressure vessel
50: Vacuum bag
52: Pressure reducing means

## Claims

1. A vacuum joint for connecting adjacent connection ends of a pair of vacuum pipes (12X, 12Y) so as to allow a fluid to flow through the vacuum pipes (12X, 12Y), the vacuum joint comprising:
a first coupling member (14) having a tubular shape and adapted to be attached to the connection end of the vacuum pipe (12X); and
a second coupling member (16) having a tubular shape and adapted to be attached to the connection end of the vacuum pipe (12Y), wherein
the first coupling member (14) has an axial front end with a substantially flat contact surface (14a) that contains a ferromagnetic material, and the second coupling member (16) has an axial front end with a substantially flat contact surface (16a) that contains a ferromagnetic material, and
at least one of the contact surface (14a) of the first coupling member (14) and the contact surface (16a) of the second coupling member (16) includes a magnet (18).

2. The vacuum joint according to claim 1, wherein the first coupling member (14) and the second coupling member (16) each include a fluid control means configured to allow a fluid to flow through the first and second coupling members (14, 16) when the first and second coupling members (14, 16) are connected together and to stop the flow of the fluid through the first and second coupling members (14, 16) when the first and second coupling members (14, 16) are separated from each other.

3. The vacuum joint according to claim 1 or 2, wherein the magnet (18) has a residual magnetic flux density of 40 mT or more after being heated at 180°C for 30 minutes in the atmosphere.

4. The vacuum joint according to any one of claims 1 to 3, wherein when the vacuum joint is used in a heat treatment device, the ferromagnetic material contained in the contact surface (14a) of the first coupling member (14) and the ferromagnetic material contained in the contact surface (16a) of the second coupling member (16) each have a Curie temperature higher than a processing temperature of the heat treatment device.

5. The vacuum joint according to any one of claims 1 to 4, wherein the contact surface (14a) of the first coupling member (14) or the contact surface (16a) of the second coupling member (16) includes a sealing member (20) configured to seal an interface formed between the contact surface (14a) and the contact surface (16a) when the contact surface (14a) and the contact surface (16a) are brought into contact with each other, so as to prevent inflow or outflow of a fluid at the interface.

6. The vacuum joint according to any one of claims 1 to 5, wherein one of the contact surface (14a) of the first coupling member (14) and the contact surface (16a) of the second coupling member (16) has a projection (24) for positioning, and the other one of the contact surface (14a) and the contact surface (16a) has a recess (26) for guiding and receiving the projection (24), in a position corresponding to the projection (24).

7. The vacuum joint according to any one of claims 1 to 6, wherein
the contact surface (14a) of the first coupling member (14) includes a ring-shaped magnet (18a) embedded therein, and the contact surface (16a) of the second coupling member (16) includes a ring-shaped magnet (18b) embedded therein and having substantially the same shape and size as the ring-shaped magnet (18a), and
the ring-shaped magnets (18a, 18b) are each divided circumferentially into an even number of equal parts, and the parts are arranged so that surfaces of the adjacent parts have opposite magnetic polarities.

8. A vacuum utilization device comprising the vacuum joint according to any one of claims 1 to 7.

9. The vacuum utilization device according to claim 8, wherein the vacuum utilization device is a device for producing molded articles.

10. The vacuum utilization device according to claim 9, wherein the device for producing molded articles is an autoclave molding device comprising a pressure vessel (40), the device being configured to: evacuate an interior of a vacuum bag (50) that covers a prepreg (36) made of a fibrous base material and a thermosetting or thermoplastic resin matrix and that is placed in the pressure vessel (40); and then heat and pressurize the prepreg (36) so as to mold the prepreg (36) into a predetermined shape.

## Amended claims

### Amended claims under Art. 19.1 PCT

1. (Amended) A vacuum joint for connecting adjacent connection ends of a pair of vacuum pipes (12X, 12Y) so as to allow a fluid to flow through the vacuum pipes (12X, 12Y), the vacuum joint comprising:
a first coupling member (14) having a tubular shape and adapted to be attached to the connection end of the vacuum pipe (12X); and
a second coupling member (16) having a tubular shape and adapted to be attached to the connection end of the vacuum pipe (12Y), wherein
the first coupling member (14) has an axial front end with a substantially flat contact surface (14a) that contains a ferromagnetic material, and the second coupling member (16) has an axial front end with a substantially flat contact surface (16a) that contains a ferromagnetic material, and
at least one of the contact surface (14a) of the first coupling member (14) and the contact surface (16a) of the second coupling member (16) includes a ring-shaped magnet (18) embedded therein to surround a through hole (14b) of the first coupling member (14) and/or a through hole (16b) of the second coupling member (16).

2. The vacuum joint according to claim 1, wherein the first coupling member (14) and the second coupling member (16) each include a fluid control means configured to allow a fluid to flow through the first and second coupling members (14, 16) when the first and second coupling members (14, 16) are connected together and to stop the flow of the fluid through the first and second coupling members (14, 16) when the first and second coupling members (14, 16) are separated from each other.

3. The vacuum joint according to claim 1 or 2, wherein the magnet (18) has a residual magnetic flux density of 40 mT or more after being heated at 180°C for 30 minutes in the atmosphere.

4. The vacuum joint according to any one of claims 1 to 3, wherein when the vacuum joint is used in a heat treatment device, the ferromagnetic material contained in the contact surface (14a) of the first coupling member (14) and the ferromagnetic material contained in the contact surface (16a) of the second coupling member (16) each have a Curie temperature higher than a processing temperature of the heat treatment device.

5. The vacuum joint according to any one of claims 1 to 4, wherein the contact surface (14a) of the first coupling member (14) or the contact surface (16a) of the second coupling member (16) includes a sealing member (20) configured to seal an interface formed between the contact surface (14a) and the contact surface (16a) when the contact surface (14a) and the contact surface (16a) are brought into contact with each other, so as to prevent inflow or outflow of a fluid at the interface.

6. The vacuum joint according to any one of claims 1 to 5, wherein one of the contact surface (14a) of the first coupling member (14) and the contact surface (16a) of the second coupling member (16) has a projection (24) for positioning, and the other one of the contact surface (14a) and the contact surface (16a) has a recess (26) for guiding and receiving the projection (24), in a position corresponding to the projection (24).

7. The vacuum joint according to any one of claims 1 to 6, wherein
the contact surface (14a) of the first coupling member (14) includes a ring-shaped magnet (18a) embedded therein, and the contact surface (16a) of the second coupling member (16) includes a ring-shaped magnet (18b) embedded therein and having substantially the same shape and size as the ring-shaped magnet (18a), and
the ring-shaped magnets (18a, 18b) are each divided circumferentially into an even number of equal parts, and the parts are arranged so that surfaces of the adjacent parts have opposite magnetic polarities.

8. A vacuum utilization device comprising the vacuum joint according to any one of claims 1 to 7.

9. The vacuum utilization device according to claim 8, wherein the vacuum utilization device is a device for producing molded articles.

10. The vacuum utilization device according to claim 9, wherein the device for producing molded articles is an autoclave molding device comprising a pressure vessel (40), the device being configured to: evacuate an interior of a vacuum bag (50) that covers a prepreg (36) made of a fibrous base material and a thermosetting or thermoplastic resin matrix and that is placed in the pressure vessel (40); and then heat and pressurize the prepreg (36) so as to mold the prepreg (36) into a predetermined shape.

Statement under Art. 19.1 PCT
Claim 1 has been amended to clearly specify that the "magnet (18)" attached to at least one of the contact surface (14a) of the first coupling member (14) and the contact surface (16a) of the second coupling member (16) is a "ring-shaped magnet" "embedded therein to surround a through hole (14b) of the first coupling member (14) and/or a through hole (16b) of the second coupling member (16)".

With this configuration, when the contact surface (14a) of the first coupling member (14) and the contact surface (16a) of the second coupling member (16) are brought into contact with each other to connect the first and second coupling members (14, 16) together, the magnet (18) is placed deep in the vacuum joint and not exposed on the surface of the vacuum joint. Thus, the present invention has the effect of minimizing the influence of external factors, such as heat and shock, on the magnet (18).

In contrast, none of the cited documents disclose or suggest the above-mentioned invention-specifying matters.
